# EUROPÄISCHE PATENTSCHRIFT

(11) **EP 3 386 670 B1**
(45) Veröffentlichungstag und Bekanntmachung des Hinweises auf die Patenterteilung: **26.03.2025**
(21) Anmeldenummer: 16808914.2
(22) Anmeldetag: 07.12.2016
(51) Int. Cl.: B23F 23/06, B23F 23/02, B23Q 39/02, B23F 17/00, B23F 23/12, B23F 19/10

(54) **VERFAHREN ZUM ERZEUGEN ODER BEARBEITEN VON VERZAHNUNGEN UND DAZU AUSGELEGTE VERZAHNUNGSMASCHINE**
METHOD FOR CREATING OR MACHINING GEARS AND GEAR-CUTTING MACHINE DESIGNED THEREFOR
PROCÉDÉ DE PRODUCTION OU D'USINAGE D'ENGRENAGES ET MACHINE À TAILLER LES ENGRENAGES CONÇUE POUR METTRE EN OEUVRE LE PROCÉDÉ

(30) Priorität: 07.12.2015 DE 102015015810
(43) Veröffentlichungstag der Anmeldung: 17.10.2018
(73) Patentinhaber: Gleason-Pfauter Maschinenfabrik GmbH, 71636 Ludwigsburg (DE)
(72) Erfinder: KLEINBACH, Kurt, 71717 Beilstein (DE); BROGNI, Johannes, 3293 Dotzigen (CH)
(74) Vertreter: Leinweber & Zimmermann
(86) Internationale Anmeldenummer: PCT/EP2016/002061
(87) Internationale Veröffentlichungsnummer: WO 2017/097416

(56) Entgegenhaltungen:
- EP-B1- 2 456 587
- WO-A1-2006/010709
- DE-A1- 102013 003 769
- DE-A1- 102013 212 432
- DE-T2- 69 901 004
- JP-A- 2000 126 953
- JP-A- S59 152 013
- US-A- 4 719 676
- US-A1- 2010 278 606
- US-B2- 7 448 304

## Beschreibung

Die Erfindung betrifft ein Verfahren zum Erzeugen oder Bearbeiten von Verzahnungen an Werkstücken, bei dem man auf einer Verzahnungsmaschine an einer ersten Stelle einen wälzenden ersten Bearbeitungseingriff zwischen einem mittels eines werkzeugseitigen Spindelantriebmotors um seine Drehachse angetriebenen Bearbeitungswerkzeug und einem um die Drehachse einer ersten werkstückseitigen Spindel drehbaren ersten Werkstück realisiert und an einem um die Drehachse einer von der ersten werkstückseitigen Spindel verschiedenen zweiten werkstückseitigen Spindel drehbaren, von dem ersten Werkstück verschiedenen zweiten Werkstück einen zweiten Bearbeitungseingriff realisiert, wobei das Bearbeitungswerkzeug relativ zu der ersten werkstückseitigen Spindel eine einer axialen Vorschubbewegung im ersten Bearbeitungseingriff dienenden Bewegung entlang einer eine Richtungskomponente in Richtung der ersten werkstückseitigen Spindelachse aufweisenden werkzeugseitigen Maschinenachse ausführen kann.

Derartige Verfahren sind in der Verzahnungstechnik gut bekannt und können in vielfältiger Weise ausgeführt werden.

So könnte beispielsweise der erste Bearbeitungseingriff der eines Wälzschleifens sein, bei dem ein als Schleifschnecke gestaltetes Bearbeitungswerkzeug vorgesehen ist; die erste werkstückseitige Spindel könnte wie auch die zweite werkstückseitige Spindel auf einem drehbaren Halter angeordnet sein, und der zweite Bearbeitungseingriff an der Stelle des ersten Bearbeitungseingriffs von der Schleifschnecke vorgenommen werden, nachdem der Drehhalter um 180° gedreht wurde. Eine solche Verfahrensvariante und Maschinenkonstruktion ist beispielsweise in DE 699 01 004 T2 offenbart.

Eine ebenfalls auf dem Rundtischprinzip aufbauende Maschine, aber nicht zum Wälschleifen, sondern zum Wälzfräsen ausgelegt, offenbart EP 2 029 306 B1. Hier dreht eine Drehtrommel mit horizontaler Drehachse die zweite Werkstückspindel in die Bearbeitungsposition, wo ein zweiter Bearbeitungseingriff am zweiten Werkstück durch den Wälzfräser vorgenommen wird, während sich das erste Werkstück dann in der Transferposition befindet.

Es sind auch Maschinenkonstruktionen bekannt, bei denen auf nebeneinander angeordneten Wälzfräs- und Entgratstationen bei einem auf einer ersten werkstückseitigen Spindel aufgespannten Werkstück eine Wälzfräsbearbeitung stattfindet, während ein auf einer zweiten werkstückseitigen Spindel einen Bearbeitungseingriff in Form einer Sekundärbearbeitung erfährt, nämlich dem Anfasen/Entgraten. In EP 1 495 824 B1 sind dagegen Wälzfräser und ein Anfaswerkzeug auf derselben Welle angeordnet gezeigt.

Auch ist in der Bearbeitung von Werkstücken, die als Wellen ausgelegt sind und an zwei axial verschiedenen Stellen jeweils eine Verzahnung tragen, bekannt, nur eine dieser Verzahnungen durch Wälzfräsen zu erzeugen, während die andere Verzahnung durch Wälzstoßen erzeugt wird, beispielsweise weil aufgrund einer Schulter am Werkstück der Bearbeitungsraum für eine Wälzfräsoperation nicht ausreicht.

In EP 2 456 588 B1 ist ein Verfahren offenbart, bei dem auf einen Bearbeitungskopf übertragene hohe Spannungsniveaus in einer Maschine dadurch vermieden werden, dass in dem ersten Bearbeitungseingriff eine Fräsoperation stattfindet, bei der die erste werkzeugseitige Spindel bewegt wird, während der Bearbeitungskopf keine radiale Zustellbewegung ausführt, während in einem zweiten Bearbeitungseingriff auf einer zweiten Werkstückspindel ein Verzahnungsschleifen ausgeführt wird. Dann erfolgt die radiale Zustellbewegung durch den Bearbeitungskopf, während die zweite werkstückseitige Spindel steht. Diese Möglichkeit liefert dagegen die in EP 2 732 895 A1 offenbarte Werkzeugmaschine, die beispielsweise zum Wälzfräsen oder Wälzschleifen geeignet ist, nicht, da dort die eine oder mehrere vorgesehenen Werkstückspindeln gegenüber dem Maschinenbett radial nicht beweglich sind.

US 7448304 B2 offenbart ein orthogonales Linearbewegungsachssystem mit Linearachsen Z2, X1 oder Y1, die aufgrund einer Verschwenkbarkeit nicht raumfest sind, wobei eine Linearbewegungsachse entlang der Axialrichtung der Werkzeugdrehachse nur in den Fällen auftritt, in denen eine bestimmte Schwenkachseinstellung vorliegt. Bei dem in JP 2000 126953 A offenbarten System sind die verfügbaren Linearachsen X, Y und Z in ihrer Orientierung raumfest, und eine Verfahrbarkeit entlang der Werkzeugdrehachse ist nur bei vertikaler Schwenkausrichtung B oder horizontaler Schwenkausrichtung B überhaupt möglich.

Aus dem Obigen ist ersichtlich, dass es eine Vielzahl von Gestaltungsmöglichkeiten gibt, um in effizienter Weise Verzahnungen zu erzeugen oder zu bearbeiten. Der Erfindung liegt ebendiese die Aufgabe zugrunde, eine möglichst effiziente Verzahnungserzeugung oder -bearbeitung bereitzustellen, und dies insbesondere mit einer konstruktiv möglichst einfach gestalteten Verzahnungsmaschine.

Diese Aufgabe wird von der Erfindung in verfahrenstechnischer Hinsicht durch ein Verfahrens mit den Merkmalen von Anspruch 1 gelöst. Unter anderem ist vorgesehen, dass nach dem ersten Bearbeitungseingriff eine entlang dieser werkzeugseitigen Maschinenachse erfolgende, den zweiten Bearbeitungseingriff ermöglichende werkzeugseitige Positionierbewegung vorgenommen wird, wobei der zweite Bearbeitungseingriff ein dem ersten Bearbeitungseingriff von der Bearbeitungsart her gleicher, unter Einsatz desselben werkzeugseitigen Spindelantriebmotors wie bei der ersten Bearbeitung bewirkter und an einer von der ersten Stelle verschiedenen zweiten Stelle in der Verzahnungsmaschine durchgeführter Bearbeitungseingriff ist.

Dabei beruht die Erfindung auf der Erkenntnis, dass eine Vereinfachung der Maschinenkonstruktion ermöglicht wird, indem eine bei beispielsweise Wälzfräs- oder Wälzschleifmaschinen üblicherweise vorhandene, aber nur für die axiale Vorschubbewegung des Bearbeitungswerkzeugs gegenüber dem Werkstück vorgesehene Bewegungsachse in ihrem Verfahrweg ggf. soweit verlängert wird, dass unter Einsatz desselben werkzeugseitigen Spindelantriebmotors eine Bearbeitung an einem zweiten, auf einer anderen Werkstückspindel aufgespannten Werkstück erfolgen kann. Während so an der zweiten Stelle eine Bearbeitung des zweiten Werkstücks stattfindet, kann an dem Werkstück auf der ersten Spindel bereits eine Sekundärbearbeitung stattfinden oder dieses durch ein nächstes zu bearbeitendes Werkstück ausgetauscht werden. Auf diese Weise gelingt eine effiziente Verzahnungsbearbeitung mit einem gegenüber den im Stand der Technik bekannten Gestaltungen vergleichsweise einfachem Aufbau.

Der zweite Bearbeitungseingriff findet zeitlich beabstandet zu dem ersten Bearbeitungseingriff statt. Erfindungsgemäß erfolgt der zweite Bearbeitungseingriff mit einem sich um die gleiche Drehachse wie bei dem ersten Bearbeitungseingriff drehenden Bearbeitungswerkzeug, und der Spindelantrieb kann ein CNC-gesteuerter Direktantrieb sein.

Erfindungsgemäß wird der zweite Bearbeitungseingriff mit demselben Bearbeitungswerkzeug wie der erste Bearbeitungseingriff durchgeführt. Dies vereinfacht nochmals den werkzeugseitigen Aufbau der das Verfahren ausführenden Maschine.

Insbesondere bei sehr schmalen Verzahnungen und entsprechend ausgelegten beispielsweise Wälzfräsern als Bearbeitungswerkzeug ist grundsätzlich für den Bearbeitungseingriff auch ein Tauchfräsen möglich. In einer bevorzugten Verfahrensvariante erfolgt jedoch während des ersten und/oder zweiten Bearbeitungseingriffs eine werkzeugseitige Vorschubbewegung entlang der werkzeugseitigen Maschinenachse.

Die Funktionalität der Maschine ist durch die absolute Orientierung im Raum der werkzeugseitigen Maschinenachse nicht in besonderer Weise eingeschränkt. In einer besonders bevorzugten Ausführungsform ist jedoch vorgesehen, dass die werkstückseitigen Spindelachsen eine überwiegende horizontale Richtungskomponente aufweisen, bevorzugt horizontal verlaufen und insbesondere koaxial zueinander verlaufen. Dies bewirkt eine günstige Komponentenlage bezüglich des Späneflusses und einen stabilen Aufbau.

Zudem ist bevorzugt vorgesehen, dass die axialen Aufspannenden der ersten und zweiten Werkstückspindeln einander gegenüberliegen. Desweiteren wird bevorzugt, dass die werkzeugseitige Maschinenachse ebenfalls eine überwiegende horizontale Richtungskomponente aufweist, bevorzugt parallel zu den werkstückseitigen Spindelachsen. Diese Gestaltungen ermöglichen einen sehr kompakten Aufbau der Maschine und einen gemessen an der erreichbaren Effizienz vergleichsweise geringen Raumbedarf der Maschine.

In einer bevorzugten Verfahrensvariante ist vorgesehen, dass die erste und/oder die zweite werkstückseitige Spindel raumfest angeordnet ist/sind. Dadurch werden keine Zusatzantriebe für eine Positionierbewegung der Werkstückspindeln erforderlich, die Maschine wird weiter vereinfacht und erhält eine hohe Maschinensteifigkeit. Diese Variante kommt bevorzugt für die Bearbeitung von scheibenartigen Werkstücken in Betracht.

In einer alternativen Verfahrensgestaltung ist vorgesehen, dass die erste und/oder zweite werkstückseitige Spindel mit Bewegungskomponente entlang ihrer Achse beweglich ist. Zur Realisierung dieser Bewegungen können CNC-gesteuerte Servomotoren herangezogen werden. Diese Gestaltung eignet sich besonders für die Bearbeitung von Wellen in Kombination mit einem Reitstock.

In diesem Zusammenhang ist gemäß einer bevorzugten Weiterbildung der Erfindung vorgesehen, dass zwischen den beiden Werkstückspindeln eine insbesondere raumfeste und insbesondere axial beidseitig wirkende Reitstockanordnung angeordnet ist. Eine derartige Anordnung wird von der Erfindung auch eigenständig schutzwürdig und eigenständig offenbart. Die Erfindung betrifft somit ebenfalls eine Reitstockanordnung zum Einsatz in einer Verzahnungsmaschine, insbesondere für einen gegenüber der Maschine raumfesten Ankopplung an die Maschine und mit zwei bezüglich einer Axialrichtung entgegengesetzten Seiten, an denen jeweils eine Reitstockspitze angeordnet ist.

In einer besonders bevorzugten Ausgestaltung wird an dem ersten Werkstück eine anschließende Sekundärbearbeitung, insbesondere in Form einer Anfas- und/oder Entgratoperation in derselben Aufspannung wie bei dem ersten Bearbeitungseingriff durchgeführt. Damit wird vorteilhaft erreicht, dass das erste Werkstück nach dem Abspannen von der ersten Werkstückspindel bereits angefaste Zahnkanten aufweist, ohne später zur Erzeugung der Fase nochmals aufgespannt werden zu müssen. Gleicherweise kann auch an dem zweiten Werkstück an der zweiten Werkstückspindel eine solche Sekundärbearbeitung ausgeführt werden.

Dazu wird besonders bevorzugt vorgesehen, dass die die Sekundärbearbeitung ausführende Sekundärbearbeitungseinheit nach der Bearbeitung des ersten Werkstücks insbesondere parallel zur werkzeugseitigen Maschinenachse zur Sekundärbearbeitung des zweiten Werkstücks verfahren wird. In dieser Gestaltung ist nur eine Sekundärbearbeitungseinheit erforderlich. In einer besonders bevorzugten Verfahrensgestaltung führen somit sowohl das Bearbeitungswerkzeug als auch das Sekundärbearbeitungswerkzeug reziproke Bewegungen im Gegentakt aus.

Das Anfasen könnte grundsätzlich in Form eines schneidenden Anfasens wie auch in Form eines Anfasens durch plastische Verformung der Zahnkante mit dem Fachmann bekannten Techniken erfolgen. Insbesondere bei letzterer Variante ist bevorzugt vorgesehen, dass an dem ersten Werkstück ein an die Sekundärbearbeitung anschließender weiterer Bearbeitungseingriff an der ersten Stelle erfolgt, der dem ersten Bearbeitungseingriff von der Bearbeitungsart gleich ist und der unter Einsatz desselben werkzeugseitigen Spindelantriebsmotors und insbesondere desselben Bearbeitungswerkzeugs wie bei dem ersten Bearbeitungseingriff erfolgt. Auf diese Weise gelingt ohne zusätzliche Positionierbewegung des ersten Werkstücks eine Beseitigung der durch die plastische Verformung der Zahnkanten beim Anfasen auf den Zahnflanken entstandenen Sekundärgrate. In gleicher Weise kann für das zweite Werkstück an der zweiten Stelle vorgegangen werden.

Das Verfahren kann mit einer hohen Taktrate und Effizienz betrieben werden. So können die Werkstücke auf der ersten und auf der zweiten Spindel nach Fertigstellung ihrer Bearbeitung durch eine Werkstückwechselanordnung durch neu zu bearbeitende Werkstücke ausgetauscht werden. Dabei kann der Austausch des ersten Werkstücks in der oben genannten Variante der Sekundärgratentfernung zeitlich überwiegend in den Zeitraum gelegt werden, der durch die Positionierbewegung des Bearbeitungswerkzeugs entlang der werkzeugseitigen Maschinenachse zur zweiten Werkstückspindel, ihrem dortigen Bearbeitungseingriff und ihrer Rückkehr zur ersten Werkstückspindel bestimmt ist.

Der zweite Bearbeitungseingriff ist von der Bearbeitungsart her dem ersten Bearbeitungseingriff gleich. Wenn die Bearbeitungsart des ersten Bearbeitungseingriffs die des Wälzfräsens ist, erfolgt somit auch der zweite Bearbeitungseingriff im Wälzfräsverfahren, welches zudem eine besonders bevorzugte Variante der Bearbeitungsart für das erfindungsgemäße Verfahren ist. Die Erfindung ist jedoch nicht auf genau diese Art der Bearbeitung eingeschränkt. Vielmehr sind auch andere Arten der Bearbeitung möglich, unter diesen insbesondere das kontinuierliche Wälzschleifen mit einer Schleifschnecke bevorzugt vorgesehen, jedoch auch ein Honen mit z.B. einem innenverzahnten Honrad. Zudem kann als Bearbeitungsart das Wälzschälen, Hartschälen oder Schaben herangezogen werden. Ebenfalls kann der Primärbearbeitungseingriff bereits der eines Anfasens und/oder Entgratens sein.

In vorrichtungstechnischer Hinsicht stellt die Erfindung bereit eine Verzahnungsmaschine gemäß Anspruch 9 und somit unter anderem mit einer ersten Werkstückspindel zur drehend gelagerten Aufnahme eines ersten Werkstückes an einer ersten Stelle in der Maschine, eine zweite Werkstückspindel zur drehend gelagerten Aufnahme eines zweiten Werkstücks an einer zweiten Stelle in der Maschine, und einem werkzeugseitigen Spindelantriebmotor zum drehenden Antreiben wenigstens eines Bearbeitungswerkzeugs, insbesondere Wälzfräsers, und mit einer werkzeugseitigen Maschinenachse, die eine Bewegung des Bearbeitungswerkzeugs relativ zu der ersten Werkstückspindel erlaubt, sowie eine Richtungskomponente in Richtung der Achse der ersten Werkstückspindel aufweist und insbesondere im Wesentlichen (d.h. bis auf Fertigungstoleranzen) parallel dazu verläuft, wobei die Einstellung der Maschinenachse einen wälzenden und unter Einsatz des werkzeugseitigen Spindelantriebmotors erzeugten Bearbeitungseingriff in einer ersten Ansteuerung an der ersten Stelle und in einer zweiten Ansteuerung an der zweiten Stelle erlaubt.

Die Vorteile der erfindungsgemäßen Verzahnungsmaschine ergeben sich aus den oben erläuterten Vorteilen des erfindungsgemäßen Verfahrens.

So weist die Verzahnungsmaschine bevorzugt eine Steuerung auf, die die Maschine zur Durchführung eines Verfahrens nach einem der vorgenannten Verfahrensaspekte steuert.

Es ist vorgesehen, dass die erste und zweite werkstückseitige Spindelachse eine überwiegende horizontale Richtungskomponente aufweisen, bevorzugt horizontal verlaufen und insbesondere koaxial zueinander verlaufen.

Zudem ist bevorzugt vorgesehen, dass die erste und/oder zweite werkstückseitige Spindelachse parallel zu der werkstückseitigen Maschinenachse verläuft/verlaufen.

Desweiteren ist bevorzugt vorgesehen, dass die Verzahnungsmaschine mit einer Sekundärbearbeitungseinheit ausgestattet ist, insbesondere mit einer Anfas- und/oder Entgrateinheit, die insbesondere parallel zur Maschinenachse verfahrbar ist, um in einer ersten Verfahrstellung eine Sekundärbearbeitung am ersten Werkstück und in einer zweiten Verfahrstellung eine Sekundärbearbeitung am zweiten Werkstück vorzunehmen. Die Sekundärbearbeitungseinheit ist bevorzugt zu der Seite der Werkstücke angeordnet, die der Seite der Anordnung des Bearbeitungswerkzeugs im Wesentlichen diametral entgegengesetzt ist.

Weitere Merkmale, Einzelheiten und Vorteile der Erfindung ergeben sich aus der nachstehenden Beschreibung mit Bezug auf die beigefügten Figuren, von denen
Fig. 1 einen Ausschnitt einer perspektivischen Darstellung einer Wälzfräsmaschine zeigt,
Fig. 2 einen Ausschnitt einer perspektivischen Darstellung einer zweiten Ausführungsform einer Wälzfräsmaschine zeigt, und
Fig. 3 einen Ausschnitt einer perspektivischen Darstellung einer Wälzschleifmaschine zeigt.

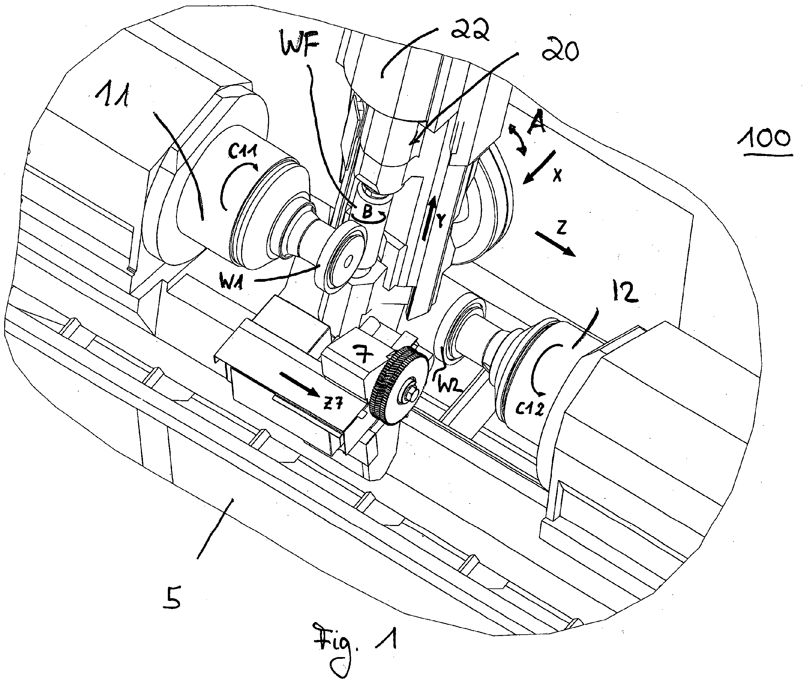

Fig. 1 zeigt im Ausschnitt eine Wälzfräsmaschine 100, auf deren Maschinenbett 5 zwei Werkstückspindeln 11, 12 raumfest angeordnet sind. Eingezeichnet in Fig. 1 ist die Drehachse C11 der ersten Werkstückspindel 11, deren Spindelachse horizontal verläuft. Die Spindelachse der zweiten Werkstückspindel 12, deren Drehachse mit C12 bezeichnet ist, verläuft ebenfalls horizontal und koaxial zur ersten Werkstückspindelachse. Nachfolgend werden diese Achsen als C11 bzw. C12 auch im Sinne ihres horizontalen Verlaufs bezeichnet. Der Abstand zwischen den jeweiligen einander zugewandten Werkstückaufspannungen ist so groß bemessen, dass ein kollisionsfreier Werkstückwechsel an einer Spindel möglich ist, während an der anderen Werkstückspindel eine Bearbeitung stattfindet, und dass unabhängig von der Art der verwendeten Aufspannteile noch ein Freiraum zwischen zwei auf beiden Spindeln aufgespannten Werkstücken verbleibt, wie in Fig. 1 dargestellt. Die Werkstückspindeln 11, 12 verfügen jeweils über einen eigenen Antrieb, bei dem es sich um einen CNC-gesteuerten Direktantrieb handelt.

In der in Fig. 1 dargestellten Situation wird ein auf der ersten Werkstückspindel 11 aufgespanntes scheibenartiges Werkstück W1 in einer Wälzfräsbearbeitung durch einen nur schematisch dargestellten Wälzfräser WF zur Erzeugung einer Verzahnung am Werkstück W1 bearbeitet. Die Lagerung des Wälzfräskopfes 20 mit Wälzfräser WF und seinem Antrieb 22 ist dabei derart, dass die folgenden Maschinenachsbewegungen des Wälzfräsers WF möglich sind:
- die Rotation des Wälzfräsers WF um seine Drehachse B,
- eine Tangentialbewegung Y entlang der Axialrichtung der Werkzeugdrehachse B. Die Lage dieser Achse ist nicht raumfest, da der Wälzfräskopf 20 durch
- eine Schwenkbewegung um eine Schwenkachse A zum Verschwenken des Wälzfräskopfes verschwenkbar ist
- eine Bewegung entlang Axialachse Z, die ein Verfahren des Wälzfräskopfes 20 entlang der Richtung der Spindelachse C11 ermöglicht und in der Wälzfräsbearbeitung als Vorschubachse herangezogen wird, sowie
- eine Bewegung orthogonal zur Achse Z verlaufende Radialachse X, die in diesem Ausführungsbeispiel orthogonal zur Achse Z und zur Werkzeugdrehachse B verläuft.

Auch wenn dies aus Fig. 1 nicht mehr hervorgeht, werden die Maschinenachsen X, Z über eine Schlittenanordnung realisiert, die einen auf dem Maschinenbett 5 gelagerten, in Z-Richtung verfahrbaren Axialschlitten aufweist und einen an dem Axialschlitten gelagerten, in X-Richtung verfahrbaren Radialschlitten, an welchem wiederum der Wälzfräskopf 20 um die Achse A verschwenkbar angebracht ist.

Durch Verfahren des Wälzfräskopfs 20 aus der in Fig. 1 gezeigten Stellung in Richtung auf die Werkstückspindel 12 lässt sich der Wälzfräsers WF auch in Bearbeitungseingriff mit einem auf der zweiten Werkstückspindel 12 aufgespannten Werkstück W2 bringen.

Weiter dargestellt in Fig. 1 ist eine Anfas- und Entgrateinheit 7, die entlang einer parallel zur Achse Z verlaufenden Axialachse Z7 verfahrbar ist und in einer ersten Verfahrstellung ein Anfasen des auf der ersten Werkstückspindel 11 aufgespannten Werkstücks W1 vornehmen kann, sowie in der in Fig. 1 dargestellten zweiten Verfahrposition eine Anfasoperation an dem auf der zweiten Werkstückspindel 12 aufgespannten Werkstück W2. Bei der in diesem Ausführungsbeispiel verwendeten Anfaseinheit wird die Fase an den Zahnkanten der Werkstücke durch plastische Verformung erzeugt. Die dadurch auf der Zahnflanke aufgeworfenen Sekundärgrate können dadurch beseitigt werden, dass der Wälzfräser WF einen zweiten Frässchnitt am Werkstück vornimmt.

Eine bevorzugte, auf der dargestellten Wälzfräsmaschine 100 ausgeführte Bearbeitung kann folgendermaßen ablaufen:
Ein nicht dargestellter Werkstückwechsler verbringt ein erstes Werkstück W1 auf die erste Werkstückspindel 11, wo es durch den Wälzfräser WF an einer ersten durch die Axialpositionierung in Z-Richtung definierten Bearbeitungsstelle eine Wälzfräsbearbeitung erfährt. Dies entspricht der Darstellung von Wälzfräser WF und Werkstück W1 in Fig. 1.

Nach Erzeugung der Verzahnung am Werkstück W1 im ersten Frässchnitt wird der Wälzfräser WF in die zweite Bearbeitungsposition verfahren, um dort eine Verzahnung am Werkstück W2 zu erzeugen, das auf der zweiten Werkstückspindel 12 aufgespannt ist. Parallel zur Wälzfräsbearbeitung des zweiten Werkstücks kann durch Verfahren der Anfaseinrichtung 7 in ihre erste Verfahrposition ein Anfasen der Verzahnung des Werkstücks W1 erfolgen.

Anschließend kehrt der Wälzfräser WF in die erste Bearbeitungsposition zurück, um in einem zweiten Frässchnitt die Sekundärgrate von den Zahnflanken des Werkstücks W1 zu beseitigen, während die Anfaseinheit 7 in die zweite Verfahrposition gesteuert wird, um die Zahnkanten des Werkstücks W2 anzufasen.

Anschließend kann an der ersten Werkstückspindel 11 das Werkstück W1 durch ein nachfolgendes Werkstück (Rohling) W3 ausgetauscht werden, während der Wälzfräser WF wieder in die zweite Bearbeitungsposition zurückkehrt, um den zweiten Schnitt am Werkstück W2 vorzunehmen.

Somit werden der Wälzfräser WF und die Anfaseinheit 7 zwischen ihren jeweiligen Bearbeitungen axial im Gegentakt verfahren.

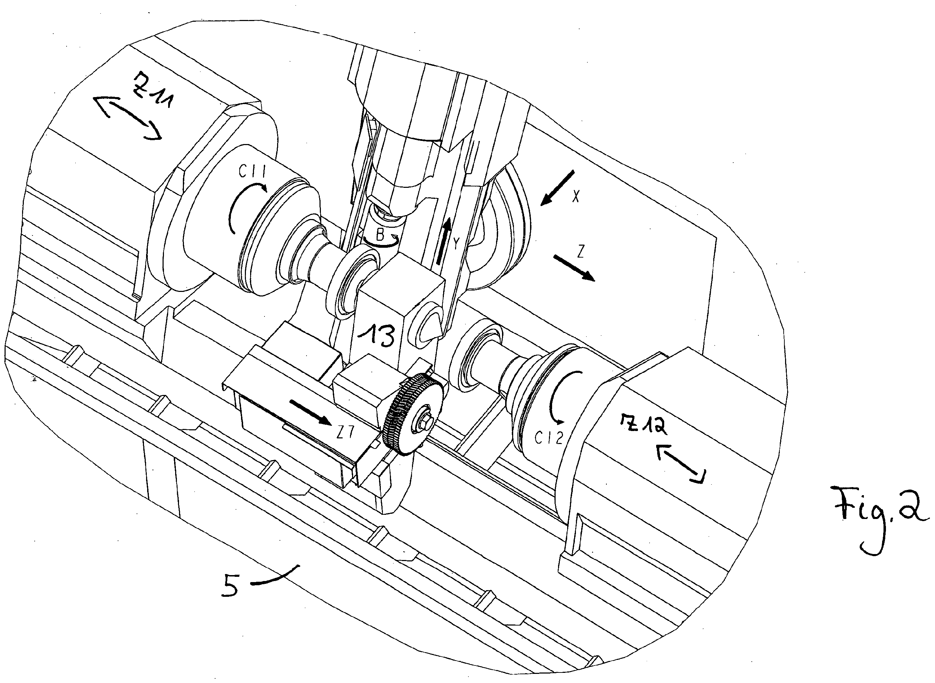

Die in Fig. 2 dargestellte Ausführungsform ist in vielfacher Hinsicht gleichartig der anhand von Fig. 1 dargestellten ersten Ausführungsform gestaltet. So ist der werkzeugseitige Aufbau gleich, und es wird diesbezüglich auf die obige Beschreibung Bezug genommen. Die Werkstückspindeln 11, 12 sind jedoch nicht raumfest angeordnet, sondern verfügen über eine jeweilige Axialbewegungsachse Z11 bzw. Z12. Zudem ist zwischen den beiden Werkstückspindeln 11, 12 eine Reitstockanordnung 13 raumfest angeordnet, die doppelseitig wirkt, also einen Reitstock für sowohl die erste Werkstückspindel 11 als auch für die zweite Werkstückspindel 12 bildet. Die zweite Ausführungsform eignet sich somit auch für die Wälzfräsbearbeitung von Wellen, ist aber auch wie die erste Ausführungsform für scheibenartige Werkstücke geeignet. Hinsichtlich der Verfahrensgestaltung mit erstem Schnitt, Anfasen und zweitem Schnitt kann dabei genauso verfahren werden, wie gemäß der obigen Beschreibung zur ersten Ausführungsform.

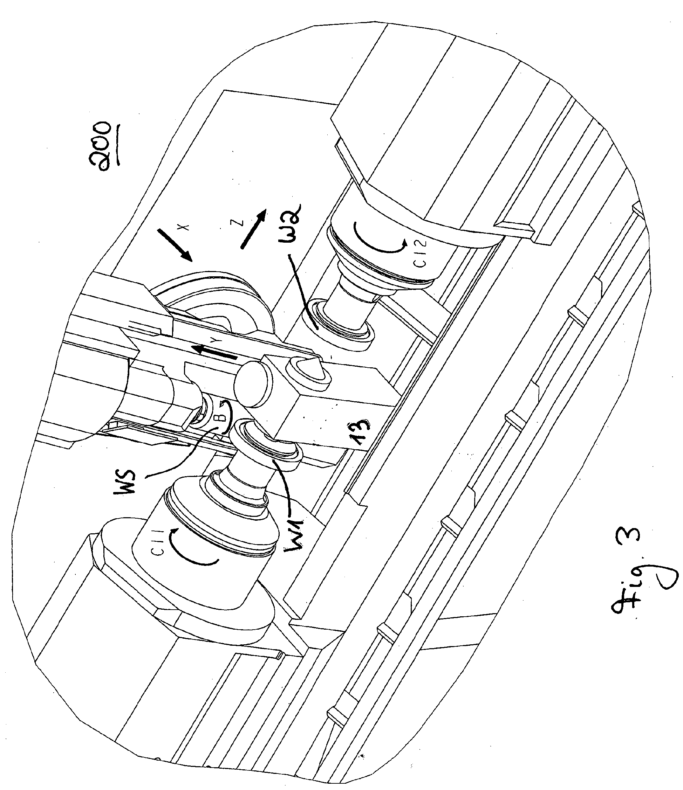

In Fig. 3 ist ausschnittsweise eine Wälzschleifmaschine 200 dargestellt. Hier trägt der Bearbeitungskopf 40 eine Schleifschnecke WS. Hinsichtlich der Maschinenachsen sind die gleichen Maschinenachsen vorgesehen wie zuvor anhand von Fig. 1 beschrieben. Die Werkstückspindeln 11 und 12 sind in dieser Ausführungsform gleichartig wie in der zweiten anhang von Fig. 2 beschriebenen Ausführungsform, auch ist die doppelseitig wirkende Reitstockanordnung 13 vorgesehen. Die Schleifschnecke WS bearbeitet das erste bereits mit einer Verzahnung versehene und gehärtete Werkstück W1 nach, um Härteverzüge zu beseitigen und das vorgesehene Aufmaß auf die gewünschte Sollgeometrie der Verzahnung abzutragen. Während der Bearbeitung der Schleifschnecke WS an dem auf der ersten Werkstückspindel 11 aufgespannten Werkstück W1 kann an der zweiten Werkstückspindel 12 ein Werkstückwechsel eines bereits geschliffenen Werkstücks durch ein noch zu schleifendes Werkstück erfolgen und vice versa.

Nicht dargestellt in Fig. 3 ist eine Einrichtung zum Einmitten/Indizieren der Verzahnung, die bevorzugt in Form eines dem Fachmann bekannten Einmittsensors vorgesehen ist. Dabei kann in einer Variante jeweils ein Sensor pro Werkstückspindel vorgesehen werden und durch eine geeignete Positioniereinrichtung zur sensorischen Erfassung der Drehlage der verzahnten Werkstücke beweglich angeordnet sein.

In einer alternativen Ausgestaltung kann auch vorgesehen werden, nur einen Sensor vorzusehen, der ähnlich wie die Anfaseinrichtung 7 der Wälzfräs-Ausführungsbeispiele verfahrbar gelagert ist und alternierend das auf der ersten Werkstückspindel 11 und das auf der zweiten Werkstückspindel 12 aufgespannte Werkstück zum Zwecke des Einmittens ansteuert.

Die Erfindung ist nicht auf die in den obigen Beispielen beschriebenen Einzelheiten eingeschränkt.

## Patentansprüche

1. Verfahren zum Erzeugen oder Bearbeiten von Verzahnungen an Werkstücken, bei dem man auf einer Verzahnungsmaschine (100; 200) an einer ersten Stelle einen wälzenden ersten Bearbeitungseingriff zwischen einem mittels eines werkzeugseitigen Spindelantriebmotors (22) um seine Drehachse (B) angetriebenen Bearbeitungswerkzeug (WF; WS) in Form eines Wälzfräsers, einer Schleifschnecke, eines Honwerkzeugs, eines Wälz- oder Hartschälwerkzeugs oder eines Schabwerkzeugs und einem um die Drehachse (C1) einer ersten werkstückseitigen Spindel (11) drehbaren ersten Werkstück (W1) realisiert und bei dem man an einem um die Drehachse einer von der ersten werkstückseitigen Spindel verschiedenen zweiten werkstückseitigen Spindel (12) drehbaren, von dem ersten Werkstück verschiedenen zweiten Werkstück (W2) einen zweiten Bearbeitungseingriff realisiert, wobei die erste und/oder zweite werkstückseitige Spindel raumfest oder entlang ihrer Achse (Z11, Z12) beweglich ist und das Bearbeitungswerkzeug relativ zu der ersten werkstückseitigen Spindel eine einer axialen Vorschubbewegung im ersten Bearbeitungseingriff dienenden Bewegung entlang einer eine Richtungskomponente in Richtung der ersten werkstückseitigen Spindelachse aufweisenden, insbesondere parallel dazu verlaufenden werkzeugseitigen Maschinenachse (Z), eine Bewegung entlang einer orthogonal zu dieser Maschinenachse (Z) und zur Werkzeugdrehachse (B) verlaufenden Radialachse (X) sowie eine Tangentialbewegung (Y) entlang der Axialrichtung der Werkzeugdrehachse (B) ausführen kann, deren Lage aufgrund einer Verschwenkbarkeit des Bearbeitungswerkzeugs um eine Schwenkachse (A) nicht raumfest ist,
wobei nach dem ersten Bearbeitungseingriff eine entlang dieser werkzeugseitigen Maschinenachse (Z) erfolgende, den zweiten Bearbeitungseingriff ermöglichende werkzeugseitige Positionierbewegung vorgenommen wird, wobei der zweite Bearbeitungseingriff ein dem ersten Bearbeitungseingriff von der Bearbeitungsart her gleicher, unter Einsatz desselben werkzeugseitigen Spindelantriebmotors wie bei der ersten Bearbeitung bewirkter, mit demselben, sich um die gleiche Drehachse (B) wie bei dem ersten Bearbeitungseingriff drehenden Bearbeitungswerkzeug (WF; WS) wie der erste Bearbeitungseingriff ausgeführter und an einer von der ersten Stelle verschiedenen zweiten Stelle in der Verzahnungsmaschine durchgeführter Bearbeitungseingriff ist.

2. Verfahren nach Anspruch 1, bei dem während des ersten und/oder zweiten Bearbeitungseingriffs eine werkzeugseitige Vorschubbewegung entlang der werkzeugseitigen Maschinenachse erfolgt.

3. Verfahren nach einem der vorhergehenden Ansprüche, bei dem die werkstückseitigen Spindelachsen (C1, C2) eine überwiegende horizontale Richtungskomponente aufweisen, bevorzugt horizontal und insbesondere koaxial zueinander verlaufen.

4. Verfahren nach einem der vorhergehenden Ansprüche, bei dem die zweite werkstückseitige Spindelachse parallel zur ersten werkzeugseitigen Maschinenachse verläuft.

5. Verfahren nach einem der vorhergehenden Ansprüche, bei dem zwischen den beiden Werkstückspindeln eine insbesondere raumfeste und insbesondere beidseitig wirkende Reitstockanordnung (13) vorgesehen ist.

6. Verfahren nach einem der vorhergehenden Ansprüche, bei dem an dem ersten Werkstück eine anschließende Sekundärbearbeitung, insbesondere in Form einer Anfas- und/oder Entgratoperation in derselben Aufspannung wie bei dem ersten Bearbeitungseingriff durchgeführt wird.

7. Verfahren nach Anspruch 6, bei dem die die Sekundärbearbeitung ausführende Sekundärbearbeitungseinheit (7) nach der Bearbeitung des ersten Werkstücks insbesondere parallel zur werkzeugseitigen Maschinenachse zur Sekundärbearbeitung des zweiten Werkstücks verfahren (Z7) wird.

8. Verfahren nach Anspruch 6 oder 7, bei dem an dem ersten Werkstück ein an die Sekundärbearbeitung anschließender weiterer Bearbeitungseingriff an der ersten Stelle erfolgt, der dem ersten Bearbeitungseingriff von der Bearbeitungsart gleich ist und unter Einsatz desselben werkzeugseitigen Spindelantriebmotors und insbesondere desselben Bearbeitungswerkzeugs wie bei dem ersten Bearbeitungseingriff erfolgt.

9. Verzahnungsmaschine (100; 200), mit
einer ersten Werkstückspindel (11) zur drehend gelagerten Aufnahme eines ersten Werkstückes (W1) an einer ersten Stelle in der Maschine,
einer zweiten Werkstückspindel (12) zur drehend gelagerten Aufnahme eines zweiten Werkstücks (W2) an einer zweiten Stelle in der Maschine, wobei die erste und/oder zweite werkstückseitige Spindel raumfest oder entlang ihrer Achse (Z11, Z12) beweglich ist, und
einem werkzeugseitigen Spindelantriebmotor (22) zum drehenden Antreiben wenigstens eines Bearbeitungswerkzeugs (WF; WS), in Form eines Wälzfräsers, einer Schleifschnecke, eines Honwerkzeugs, eines Wälz- oder Hartschälwerkzeugs oder eines Schabwerkzeugs,
mit einer werkzeugseitigen Maschinenachse (Z), die eine Bewegung des Bearbeitungswerkzeugs relativ zu der ersten Werkstückspindel erlaubt, sowie eine Richtungskomponente in Richtung der Achse der ersten Werkstückspindel aufweist und insbesondere parallel dazu verläuft, sowie Maschinenachsen für Maschinenachsbewegungen aufweisend eine Bewegung entlang einer orthogonal zu dieser Maschinenachse (Z) und zur Werkzeugdrehachse (B) verlaufenden Radialachse (X) sowie einer Tangentialbewegung (Y) entlang der Axialrichtung der Werkzeugdrehachse (B), deren Lage aufgrund einer Verschwenkbarkeit des Bearbeitungswerkzeugs um eine Schwenkachse (A) nicht raumfest ist, wobei die Einstellung dieser Maschinenachse einen wälzenden und unter Einsatz des werkzeugseitigen Spindelantriebmotors bewirkten Bearbeitungseingriff mit demselben Bearbeitungswerkzeug in einer ersten Ansteuerung an der ersten Stelle und in einer zweiten Ansteuerung an der zweiten Stelle erlaubt.

10. Verzahnungsmaschine nach Anspruch 9, mit einer Steuerung, die die Maschine zur Durchführung eines Verfahrens nach einem der Ansprüche 1 bis 8 steuert.

11. Verzahnungsmaschine nach Anspruch 9 oder 10, bei dem die erste und zweite werkstückseitige Spindelachse eine überwiegende horizontale Richtungskomponente aufweisen, bevorzugt horizontal verlaufen und die insbesondere koaxial zueinander verlaufen.

12. Verzahnungsmaschine nach einem der Ansprüche 9 bis 11, bei dem die ersten und/oder zweiten werkstückseitigen Spindelachsen parallel zu der werkzeugseitigen Maschinenachse verlaufen.

13. Verzahnungsmaschine nach einem der Ansprüche 9 bis 12, mit einer Sekundärbearbeitungseinheit (7), insbesondere Anfas- und/oder Entgrateinheit, die insbesondere parallel zur Maschinenachse verfahrbar ist, um in einer ersten Verfahrstellung eine Sekundärbearbeitung am ersten Werkstück und in einer zweiten Verfahrstellung eine Sekundärbearbeitung am zweiten Werkstück vorzunehmen.

## Claims

1. A method for producing or machining gears on workpieces, wherein a rolling first machining engagement between a machining tool (WF; WS) in the form of a hob, grinding worm, honing tool, power-skiving or hard skiving tool or shaving tool, driven around its axis of rotation (B) by means of a tool-side spindle drive motor (22), and a first workpiece (W1), which is rotatable around the axis of rotation (C1) of a first workpiece-side spindle (11), is performed at a first location on a gear-cutting machine (100; 200), and wherein a second machining engagement is performed at a second workpiece (W2), different from the first workpiece, which is rotatable around the axis of rotation of a second workpiece-side spindle (12) that is different from the first workpiece-side spindle, wherein the first and/or second workpiece-side spindle is fixed in space or is movable along its axis (Z11, Z12) and the machining tool can execute, relative to the first workpiece-side spindle, a movement, serving as an axial infeed movement in the first machining engagement, along a tool-side machine axis (Z) that has a directional component in the direction of the first workpiece-side spindle axis and in particular extends parallel thereto, a movement along a radial axis (X) extending orthogonally to this machine axis (Z) and to the tool axis of rotation (B), and a tangential movement (Y) along the axial direction of the tool axis of rotation (B), the position of which is not fixed in space due to a pivotability of the machining tool around a pivot axis (A),
wherein after the first machining engagement, a tool-side positioning movement which takes place along this tool-side machine axis (Z) and allows the second machining engagement is carried out, wherein the second machining engagement is a machining engagement that is identical to the first machining engagement in terms of type of machining, is effected using the same tool-side spindle drive motor as in the first machining, is performed with the same machining tool (WF; WS) rotating around the same axis of rotation (B) as in the first machining engagement, and is carried out in the gear-cutting machine at a second location that is different from the first location.

2. The method according to claim 1, wherein, during the first and/or second machining engagement, a tool-side feed motion occurs along the tool-side machine axis.

3. The method according to one of the preceding claims, wherein the workpiece-side spindle axes (C1, C2) have a predominantly horizontal directional component, and preferably extend in a horizontal direction and in particular coaxially relative to each other.

4. The method according to one of the preceding claims, wherein the second workpiece-side spindle axis extends parallel to the first tool-side machine axis.

5. The method according to one of the preceding claims, wherein, between the two workpiece spindles, a tailstock arrangement (13) is provided, which in particular is fixed in space and in particular is acting from both sides.

6. The method according to one of the preceding claims, wherein a subsequent secondary machining, in particular a chamfering and/or deburring operation, is performed on the first workpiece in the same chuck as the first machining engagement.

7. The method according to claim 6, wherein, after the machining of the first workpiece, the secondary machining unit (7) performing the secondary machining is moved (Z7), in particular parallel to the tool-side machine axis, for the secondary machining of the second workpiece).

8. The method according to claim 6 or 7, wherein on the first workpiece, a further machining engagement following the secondary machining takes place at the first location, which machining engagement is of the same machining type as the first machining engagement, and which is performed using the same tool-side spindle drive motor and in particular using the same machining tool as the first machining engagement.

9. A gear-cutting machine (100; 200), comprising:
a first workpiece spindle (11) for rotatably holding a first workpiece (W1) at a first location in the machine;
a second workpiece spindle (12) for rotatably holding a second workpiece (W2) at a second location in the machine, wherein the first and/or second workpiece-side spindle is fixed in space or is movable along its axis (Z11, Z12); and
a tool-side spindle drive motor (22) for rotatably driving at least one machining tool (WF; WS), in the form of a hob, grinding worm, honing tool, power-skiving or hard skiving tool or shaving tool,
comprising a tool-side machine axis (Z), which allows a movement of the machining tool relative to the first workpiece spindle, and which has a directional component in the direction of the axis of the first workpiece spindle, and in particular extends parallel thereto, as well as having machine axes for machine axis movements having a movement along a radial axis (X) extending orthogonally to this machine axis (Z) and to the tool axis of rotation (B), and having a tangential movement (Y) along the axial direction of the tool axis of rotation (B), the position of which is not fixed in space due to a pivotability of the machining tool around a pivot axis (A), wherein the setting of this machine axis allows a rolling machining engagement, effected using the tool-side spindle drive motor, with the same machining tool in a first actuation at the first location and in a second actuation at the second location.

10. The gear-cutting machine according to claim 9, comprising a control, which controls the machine for performing a method according to one of claims 1 to 8.

11. The gear-cutting machine according to claim 9 or 10, wherein the first and second workpiece-side spindle axes have a predominantly horizontal directional component, preferably extend in a horizontal direction, and in particular extend coaxially relative to each other.

12. The gear-cutting machine according to one of claims 9 to 11, wherein the first and/or second workpiece-side spindle axes extend parallel to the tool-side machine axis.

13. The gear-cutting machine according to one of claims 9 to 12, comprising a secondary machining unit (7), in particular a chamfering and/or deburring unit, which in particular can be moved parallel to the machine axis in order to perform, in a first displaced position, a secondary machining on the first workpiece and, in a second displaced position, a secondary machining on the second workpiece.

## Revendications

1. Procédé de production ou d'usinage de dentures sur des pièces, dans lequel on réalise, sur une machine à tailler les dentures (100 ; 200), à un premier emplacement, une première prise d'usinage par roulement entre un outil d'usinage (WF ; WS) - entraîné sur son axe de rotation (B) par un moteur d'entraînement de broche (22) et consistant en une fraise-mère, une meule-mère de rectification, un outil de rodage, un outil de power-skiving ou de hard skiving ou un outil de rasage - et une première pièce (W1) pouvant tourner sur l'axe de rotation (C1) d'une première broche côté pièce (11), et dans lequel on réalise une deuxième prise d'usinage sur une deuxième pièce (W2) différente de la première pièce et pouvant tourner sur l'axe de rotation d'une deuxième broche côté pièce (12) qui est différente de la première broche côté pièce, lesdites première et/ou deuxième broches côté pièce étant fixes dans l'espace ou bien mobiles le long de leur axe (Z11, Z12) et ledit outil d'usinage étant capable d'exécuter, par rapport à la première broche côté pièce, un mouvement servant à une avance axiale en première prise d'usinage et orienté le long d'un axe machine côté outil (Z) présentant une composante directionnelle dans la direction du premier axe de broche côté pièce et notamment parallèle à ce dernier, un mouvement le long d'un axe radial (X) orthogonal audit axe machine (Z) et à l'axe de rotation de l'outil (B) ainsi qu'un mouvement tangentiel (Y) le long de la direction axiale de l'axe de rotation de l'outil (B), dont la position n'est pas fixe dans l'espace en raison de l'aptitude au pivotement de l'outil d'usinage sur un axe de pivot (A),
étant entendu que, après la première prise d'usinage, on entreprend un mouvement de positionnement côté outil qui s'effectue le long dudit axe machine côté outil (Z) et qui permet ladite deuxième prise d'usinage, ladite deuxième prise d'usinage étant une prise d'usinage qui est similaire à la première prise d'usinage en ce qui concerne le type d'usinage et qui fait appel au même moteur d'entraînement de broche côté outil que lors de la première prise d'usinage, avec le même outil d'usinage (WF ; WS) tournant sur le même axe de rotation (B) que la première prise d'usinage et qui est réalisée à un deuxième emplacement de la machine à tailler les dentures qui est différent du premier emplacement.

2. Procédé selon la revendication 1, dans lequel, pendant la première et/ou la deuxième prise d'usinage, il s'effectue une avance côté outil le long de l'axe machine côté outil.

3. Procédé selon l'une des revendications précédentes, dans lequel les axes de broche côté pièce (C1, C2) présentent une composante directionnelle essentiellement horizontale, en étant de préférence horizontaux et notamment coaxiaux.

4. Procédé selon l'une des revendications précédentes, dans lequel le deuxième axe de broche côté pièce est parallèle au premier axe machine côté outil.

5. Procédé selon l'une des revendications précédentes, dans lequel un ensemble contre-pointe (13) est prévu entre les deux broches porte-pièce, notamment un ensemble contre-pointe fixe dans l'espace et en particulier à action bilatérale.

6. Procédé selon l'une des revendications précédentes, dans lequel un usinage secondaire ultérieur, notamment sous la forme d'une opération de chanfreinage et/ou d'ébavurage, est effectué sur la première pièce sans changement d'ablocage par rapport à la première prise d'usinage.

7. Procédé selon la revendication 6, dans lequel l'unité d'usinage secondaire (7) exécutant l'usinage secondaire est déplacée (Z7), notamment parallèlement à l'axe machine côté outil, après l'usinage de la première pièce en vue de l'usinage secondaire de la deuxième pièce.

8. Procédé selon la revendication 6 ou 7, dans lequel il est effectué sur la première pièce, au premier emplacement, une prise d'usinage supplémentaire postérieure à l'usinage secondaire qui est similaire à la première prise d'usinage en ce qui concerne le type d'usinage et qui fait appel au même moteur d'entraînement de broche côté outil et notamment au même outil d'usinage que lors de la première prise d'usinage.

9. Machine à tailler les dentures (100 ; 200) comportant :
une première broche porte-pièce (11) destinée à recevoir, avec faculté de rotation, une première pièce (W1) à un premier emplacement dans la machine,
une deuxième broche porte-pièce (12) destinée à recevoir, avec faculté de rotation, une deuxième pièce (W2) à un deuxième emplacement dans la machine, lesdites première et/ou deuxième broches côté pièce étant fixes dans l'espace ou bien mobiles le long de leur axe (Z11, Z12), et
un moteur d'entraînement de broche côté outil (22) pour entraîner en rotation au moins un outil d'usinage (WF ; WS), consistant en une fraise-mère, une meule-mère de rectification, un outil de rodage, un outil de power-skiving ou de hard skiving ou un outil de rasage,
et présentant un axe machine côté outil (Z) qui permet un mouvement de l'outil d'usinage par rapport à la première broche porte-pièce et qui présente une composante directionnelle dans la direction de l'axe de la première broche porte-pièce et notamment parallèle à ce dernier, et présentant également des axes machine pour des mouvements d'axe machine comprenant un mouvement le long d'un axe radial (X) orthogonal audit axe machine (Z) et à l'axe de rotation de l'outil (B) ainsi qu'un mouvement tangentiel (Y) le long de la direction axiale de l'axe de rotation de l'outil (B), dont la position n'est pas fixe dans l'espace en raison de l'aptitude au pivotement de l'outil d'usinage sur un axe de pivot (A), le réglage dudit axe machine permettant une prise d'usinage par roulement faisant appel au moteur d'entraînement de broche côté outil et avec le même outil d'usinage, au premier emplacement dans le cadre d'une première commande et au deuxième emplacement dans le cadre d'une deuxième commande.

10. Machine à tailler les dentures selon la revendication 9, comportant un organe de commande qui commande la machine pour mettre en œuvre un procédé selon l'une des revendications 1 à 8.

11. Machine à tailler les dentures selon la revendication 9 ou 10, dans laquelle les premier et deuxième axes de broche côté pièce présentent une composante directionnelle essentiellement horizontale, en étant de préférence horizontaux et notamment coaxiaux.

12. Machine à tailler les dentures selon l'une des revendications 9 à 11, dans laquelle les premier et/ou deuxième axes de broche côté pièce sont parallèles à l'axe machine côté outil.

13. Machine à tailler les dentures selon l'une des revendications 9 à 12, comportant une unité d'usinage secondaire (7), notamment une unité de chanfreinage et/ou d'ébavurage, qui est déplaçable notamment parallèlement à l'axe machine pour réaliser un usinage secondaire sur la première pièce dans une première position de déplacement et un usinage secondaire sur la deuxième pièce dans une deuxième position de déplacement.
